# EUROPEAN PATENT APPLICATION

(11) **EP 3 208 122 A1**
(43) Date of publication of application: **23.08.2017**
(21) Application number: 15850031.4
(22) Date of filing: 14.10.2015
(51) Int. Cl.: B60H 1/32, B60H 1/22, F25B 1/00

(54) **AIR CONDITIONING DEVICE FOR VEHICLE**

(30) Priority: 17.10.2014 JP 2014212774; 09.09.2015 JP 2015177548
(71) Applicant: Panasonic Intellectual Property Management Co., Ltd., Osaka-shi, Osaka 540-6207 (JP)
(72) Inventor: KURODA, Kentaro, Osaka 540-6207 (JP); NODA, Yoshitoshi, Osaka 540-6207 (JP)
(74) Representative: Schwabe - Sandmair - Marx
(86) International application number: PCT/JP2015/005187
(87) International publication number: WO 2016/059791

(57) **Abstract**

An air conditioning device for a vehicle includes: a water-refrigerant condenser that condenses a refrigerant at a high temperature by heat exchange with a coolant; a water-refrigerant evaporator that evaporates the refrigerant at a low pressure by heat exchange with the coolant; a refrigerant passage switching portion configured to switch a delivery route of the refrigerant in the water-refrigerant condenser between a first refrigerant passage leading to the water-refrigerant evaporator and a second refrigerant passage leading to a cooling evaporator that cools air to be sent into a vehicle interior; and a first water passage that causes a passage for the coolant in the water-refrigerant condenser to be communicated with a radiator that radiates heat of the coolant to outside air, wherein in a cooling mode, the delivery route of the refrigerant in the water-refrigerant condenser is switched to the second refrigerant passage, and heat transferred from air to the refrigerant by the cooling evaporator is transferred from the refrigerant to the coolant by the water-refrigerant condenser and radiated from the coolant to the outside air by the radiator.

## Description

### TECHNICAL FIELD

The present invention relates to an air conditioning device for a vehicle.

### BACKGROUND ART

There has conventionally been an air conditioning device for a vehicle that provides cooling and heating for a vehicle interior by utilizing a heat pump (see Patent Literature 1, for example). Heating for the vehicle interior is provided by utilizing engine waste heat and the heat pump.

It is general that an air conditioning device for a vehicle providing cooling by utilizing a heat pump includes an outdoor condenser that radiates heat to air outside of a vehicle interior from a refrigerant as a configuration for radiating heat from a high-temperature refrigerant (for example, condenser 76 in Patent Literature 1). The outdoor condenser is mounted on a front part of the vehicle so that more air outside the vehicle is blown against the outdoor condenser.

On the other hand, when the air conditioning device for a vehicle described above provides heating for the vehicle interior, the flow of the refrigerant is controlled such that the refrigerant does not flow through the condenser used for cooling.

### Citation List

### Patent Literature

PTL1: U.S. Patent No. 6,640,889

### SUMMARY OF THE INVENTION

An object of the present invention is to provide an air conditioning device for a vehicle that hardly causes refrigerant stagnation even when the air conditioning device is operated by switching a cooling cycle and a heating cycle. The refrigerant stagnation means a phenomenon in which a refrigerant is stagnant on a specific portion.

An air conditioning device for a vehicle according to one aspect of the present invention includes a water-refrigerant condenser, a water-refrigerant evaporator, a refrigerant passage switching portion, and a first water passage. The water-refrigerant condenser condenses a refrigerant at a high temperature compressed by a compressor by heat exchange with a coolant. The water-refrigerant evaporator evaporates the refrigerant expanded by passing through a first expansion valve, by heat exchange with the coolant. The refrigerant passage switching portion switches a delivery route of the refrigerant in the water-refrigerant condenser between a first refrigerant passage leading to the water-refrigerant evaporator and a second refrigerant passage leading to a cooling evaporator that cools air to be sent into a vehicle interior. The first water passage delivers the coolant in the water-refrigerant condenser to a radiator that radiates heat of the coolant to outside air. In a cooling mode, the delivery route of the refrigerant in the water-refrigerant condenser is switched to the first refrigerant passage, and heat transferred from air to the refrigerant by the cooling evaporator is transferred from the refrigerant to the coolant by the water-refrigerant condenser and radiated from the coolant to the outside air by the radiator.

According to the present invention, in the cooling mode, heat transferred from air to the refrigerant by the cooling evaporator is transferred to the coolant from the refrigerant by the water-refrigerant condenser, and radiated to outside air from the coolant by the radiator. According to this configuration, a condenser that radiates heat from a refrigerant to outside air in the cooling mode can be eliminated or downsized. Accordingly, a portion where refrigerant stagnation occurs is reduced, and thus, even when the device is operated by switching the heating cycle and the cooling cycle under low ambient temperature, refrigerant stagnation can be reduced.

### BRIEF DESCRIPTION OF DRAWINGS

FIG. 1 is a diagram illustrating a configuration of an air conditioning device for a vehicle according to a first exemplary embodiment.
FIG. 2 is a diagram illustrating an operation of the air conditioning device for a vehicle, in a cooling mode, according to the first exemplary embodiment.
FIG. 3 is a diagram illustrating an operation of the air conditioning device for a vehicle, in a heating mode, according to the first exemplary embodiment.
FIG. 4 is a diagram illustrating an operation of an air conditioning device for a vehicle, in a cooling mode, according to a first modification.
FIG. 5 is a diagram illustrating an operation of the air conditioning device for a vehicle, in a heating mode, according to the first modification.
FIG. 6 is a diagram illustrating an operation of an air conditioning device for a vehicle, in a cooling mode, according to a second modification.
FIG. 7 is a diagram illustrating an operation of the air conditioning device for a vehicle, in a heating mode, according to the second modification.
FIG. 8 is a diagram illustrating an operation of an air conditioning device for a vehicle, in a cooling mode, according to a third modification.
FIG. 9 is a diagram illustrating an operation of the air conditioning device for a vehicle, in a heating mode, according to the third modification.
FIG. 10 is a diagram illustrating an operation of an air conditioning device for a vehicle, in a cooling mode, according to a fourth modification.
FIG. 11 is a diagram illustrating an operation of the air conditioning device for a vehicle, in a heating mode, according to the fourth modification.
FIG. 12 is a diagram illustrating an operation of an air conditioning device for a vehicle, in a cooling mode, according to a fifth modification.
FIG. 13 is a diagram illustrating an operation of the air conditioning device for a vehicle, in a heating mode, according to the fifth modification.
FIG. 14 is a diagram illustrating a configuration of an air conditioning device for a vehicle according to a second exemplary embodiment.
FIG. 15 is a diagram illustrating a configuration of an air conditioning device for a vehicle according to a third exemplary embodiment.
FIG. 16 is a diagram illustrating a configuration of an air conditioning device for a vehicle according to a fourth exemplary embodiment.

### DESCRIPTION OF EMBODIMENTS

Before exemplary embodiments of the present invention are described, a problem of a conventional vehicle air conditioning device will briefly be described. The above-mentioned conventional vehicle air conditioning device has a problem such that, when heating for a vehicle interior is performed by utilizing the heat pump, the outdoor condenser is extremely cooled by outside air to cause refrigerant stagnation in the outdoor condenser or in a refrigerant pipe connected to the outdoor condenser. When the refrigerant stagnation is caused, the amount of the refrigerant in a heating cycle is reduced, which affects heating efficiency. There is a case in which the air conditioning device is operated by switching the heating cycle and the cooling cycle, such as the case of requiring dehumidification during heating in winter, and in such a case, the influence of the refrigerant stagnation is increased.

The exemplary embodiments of the present invention will be described below in detail with reference to the drawings. Note that, in each exemplary embodiment, the same components are identified by the same reference marks, and the redundant description therefor will be omitted.

### FIRST EXEMPLARY EMBODIMENT

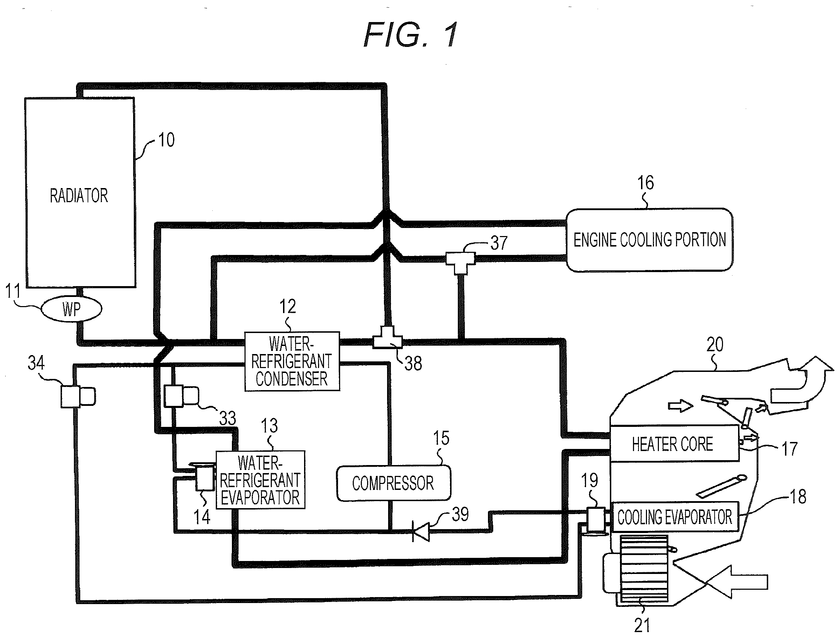

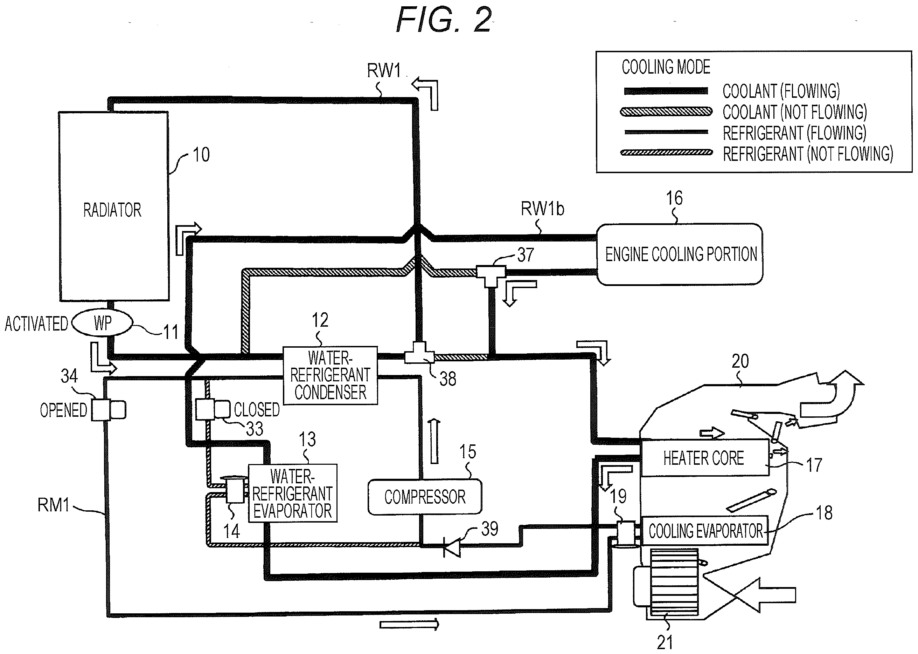

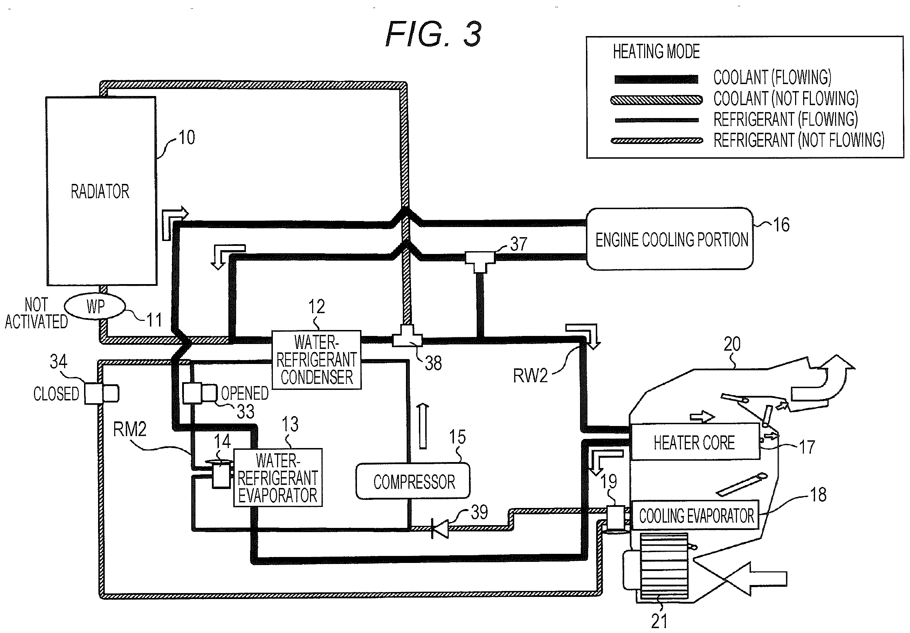

FIG. 1 is a diagram illustrating a configuration of an air conditioning device for a vehicle according to a first exemplary embodiment of the present invention. FIG. 2 is a diagram illustrating an operation of the air conditioning device for a vehicle, in a cooling mode, according to the first exemplary embodiment. FIG. 3 is a diagram illustrating an operation of the air conditioning device for a vehicle, in a heating mode, according to the first exemplary embodiment.

The air conditioning device for a vehicle according to the first exemplary embodiment includes radiator 10, water-refrigerant condenser 12, water-refrigerant evaporator 13, first expansion valve 14, compressor 15, engine cooling portion (corresponding to first cooling portion) 16, heater core 17, cooling evaporator 18, second expansion valve 19, intake fan 21, water passage switching portion (three-way valves 37 and 38 and water pump 11), and refrigerant passage switching portion (ON-OFF valves 33 and 34 and check valve 39).

Heater core 17, cooling evaporator 18, and intake fan 21 are disposed in an intake passage of HVAC (Heating, Ventilation, and Air Conditioning) 20.

A coolant flows through radiator 10, water-refrigerant condenser 12, water-refrigerant evaporator 13, heater core 17, and engine cooling portion 16. The coolant may be an antifreeze such as LLC (Long Life Coolant) for transporting heat.

A refrigerant flows through water-refrigerant condenser 12, water-refrigerant evaporator 13, compressor 15, cooling evaporator 18, first expansion valve 14, and second expansion valve 19. The refrigerant is repeatedly alternately compressed and expanded to transport heat to a high-temperature portion from a low-temperature portion by an action of the heat pump.

Radiator 10 exchanges heat between air and the coolant to radiate heat to air from the coolant. Radiator 10 may be disposed on a location where air outside of the vehicle passes.

Compressor 15 compresses the refrigerant. Compressor 15 is driven electrically or by power from an engine.

Water-refrigerant condenser 12 cools the compressed high-temperature refrigerant and condenses the refrigerant by heat-exchange with the coolant.

First expansion valve 14 expands the condensed refrigerant, and allows the expanded refrigerant to pass through water-refrigerant evaporator 13. First expansion valve 14 regulates a flow rate of the refrigerant according to the temperature and pressure of the refrigerant in water-refrigerant evaporator 13.

Water-refrigerant evaporator 13 exchanges heat between the expanded low-temperature refrigerant and the coolant to heat the expanded low-temperature refrigerant and evaporate the refrigerant.

Second expansion valve 19 expands the condensed refrigerant, and allows the expanded refrigerant to pass through cooling evaporator 18. Second expansion valve 19 regulates a flow rate of the refrigerant according to the temperature and pressure of the refrigerant in cooling evaporator 18.

Cooling evaporator 18 heats the low-temperature refrigerant to evaporate the refrigerant and cools air to be sent into the vehicle interior by heat exchange between the expanded low-temperature refrigerant and air.

Engine cooling portion 16 includes a water jacket that circulates a coolant around the engine (first heating component) and a pump that circulates the coolant through the water jacket, and radiates heat from the engine to the coolant. Engine cooling portion 16 may be connected to another radiator as well as radiator 10 so as to be capable of circulating the coolant, and when the heat generated from the engine is large, heat may be radiated from another radiator. Radiator 10 may comprehensively implement radiation of heat from the engine.

Heater core 17 exchanges heat between the high-temperature coolant and air to heat air to be sent into the vehicle interior.

Water passage switching portion (corresponding to a first water passage switching portion) includes three-way valves 37 and 38 and water pump 11. The water passage switching portion is configured to switch the delivery route of the coolant flowing through water-refrigerant condenser 12 between first water passage RW1 (see FIG. 2) leading to radiator 10 and second water passage RW2 (see FIG. 3) leading to heater core 17. Note that the water passage switching portion can also be implemented by applying other configurations. Various modifications are possible. For example, one of the three-way valves may be replaced by two ON-OFF valves.

As illustrated in FIG. 2, first water passage RW1 allows the coolant to circulate through water-refrigerant condenser 12 and radiator 10. Engine cooling portion 16, water-refrigerant evaporator 13, and heater core 17 are disconnected from first water passage RW1. Note that water-refrigerant evaporator 13 and heater core 17 may be included in first water passage RW1, so long as they have less action for heating the coolant. When first water passage RW1 is formed, another water passage RW1b which allows the coolant to circulate through engine cooling portion 16, heater core 17, and water-refrigerant evaporator 13 may be formed independently of first water passage RW1.

As illustrated in FIG. 3, second water passage RW2 allows the coolant to sequentially circulate through water-refrigerant condenser 12, heater core 17, water-refrigerant evaporator 13, and engine cooling portion 16 in this order. Radiator 10 is disconnected from second water passage RW2. Notably, the connection and disconnection between radiator 10 and second water passage RW2 may be switchable, and when the temperature of the coolant in second water passage RW2 becomes too high, radiator 10 may be connected to second water passage RW2 to implement radiation of heat from radiator 10.

The refrigerant passage switching portion (ON-OFF valves 33 and 34 and check valve 39) is configured to switch the route of the refrigerant delivered from water-refrigerant condenser 12 between first refrigerant passage RM1 (see FIG. 2) that sends the refrigerant to cooling evaporator 18 and second refrigerant passage RM2 (see FIG. 3) that sends the refrigerant to water-refrigerant evaporator 13.

First refrigerant passage RM1 allows the refrigerant to sequentially circulate through compressor 15, water-refrigerant condenser 12, second expansion valve 19, and cooling evaporator 18 in this order. The air conditioning device for a vehicle according to the present exemplary embodiment does not include an outdoor condenser that exchanges heat between a high-temperature and high-pressure refrigerant and outside air to condense the refrigerant, and further, is configured such that first expansion valve 14 and water-refrigerant evaporator 13 are disconnected from first refrigerant passage RM1.

Second refrigerant passage RM2 allows the refrigerant to sequentially circulate through compressor 15, water-refrigerant condenser 12, first expansion valve 14, and water-refrigerant evaporator 13 in this order. Second expansion valve 19 and cooling evaporator 18 are disconnected from second refrigerant passage RM2.

As one example, the refrigerant passage switching portion includes ON-OFF valves 33 and 34 and check valve 39. Check valve 39 is provided between cooling evaporator 18 and an intersection where a refrigerant inlet passage of compressor 15, a refrigerant outlet passage of water-refrigerant evaporator 13, and a refrigerant outlet passage of cooling evaporator 18 intersect one another.

Note that the refrigerant passage switching portion can be implemented by another configuration. For example, two ON-OFF valves 33 and 34 may be replaced by one three-way valve. Alternatively, ON-OFF valve 33 and first expansion valve 14 may be integrated. Check valve 39 may be replaced by an ON-OFF valve.

### <Cooling mode>

In the air conditioning device for a vehicle according to the first exemplary embodiment, in the cooling mode, the passage for the refrigerant is switched to first refrigerant passage RM1, and the passage for the coolant is switched to first water passage RW1 and water passage RW1b, as illustrated in FIG. 2. Note that the cooling mode includes a dehumidification mode.

In the cooling mode, the high-temperature and high-pressure refrigerant compressed by compressor 15 heats and condenses the coolant in water-refrigerant condenser 12, is regulated to have a low pressure by second expansion valve 19, and evaporated in cooling evaporator 18. At that time, air to be sent into the vehicle interior is cooled by cooling evaporator 18, whereby cooling for the vehicle interior is enabled. The vaporized refrigerant is returned to compressor 15 through check valve 39 which prevents the refrigerant from flowing from a refrigerant outlet port of the water-refrigerant evaporator toward a refrigerant outlet port of the cooling evaporator.

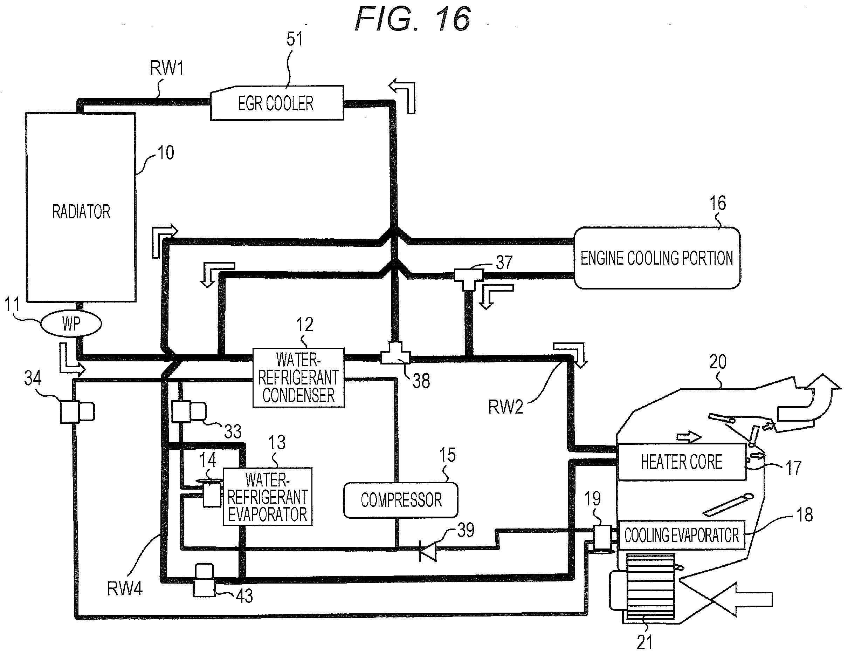

The coolant heated by water-refrigerant condenser 12 radiates heat to the outside air by radiator 10, and is returned to water-refrigerant condenser 12 by the action of water pump 11. At that time, the coolant heated by engine cooling portion 16 passes through heater core 17 and water-refrigerant evaporator 13, and then, is returned to engine cooling portion 16. At that time, air is not allowed to flow through heater core 17, and the refrigerant is not allowed to flow through water-refrigerant evaporator 13. Therefore, the heat exchange by heater core 17 and the heat exchange by water-refrigerant evaporator 13 are not performed. Note that the flow of air through heater core 17 may be allowed in this case for temperature control. In addition, as described in a fourth exemplary embodiment (see FIG. 16), a bypass passage may be formed in parallel with water-refrigerant evaporator 13 so that the coolant flows by bypassing water-refrigerant evaporator 13.

In the cooling mode, the heat transferred to the refrigerant from air by cooling evaporator 18 is transferred to the coolant by water-refrigerant condenser 12, and radiated to the outside air by radiator 10. Accordingly, this configuration can eliminate the need of an outdoor condenser that radiates heat from the refrigerant to the outside air. Alternatively, if water-refrigerant condenser 12 and an outdoor condenser are both provided, the outdoor condenser can be downsized. Therefore, it can prevent the occurrence of refrigerant stagnation in the outdoor condenser when the outside temperature is low.

### <Heating mode>

In the air conditioning device for a vehicle according to the first exemplary embodiment, in the heating mode, the passage for the refrigerant is switched to second refrigerant passage RM2, and the passage for the coolant is switched to second water passage RW2, as illustrated in FIG. 3.

In the heating mode, the high-temperature and high-pressure refrigerant compressed by compressor 15 radiates heat to the coolant and is condensed in water-refrigerant condenser 12, regulated to have a low pressure by first expansion valve 14, and then, evaporated in water-refrigerant evaporator 13. The vaporized refrigerant is returned to compressor 15.

The coolant is cooled by water-refrigerant evaporator 13, heated by engine cooling portion 16 and water-refrigerant condenser 12, and then, sent to heater core 17. Then, heater core 17 heats air to be sent into the vehicle interior, whereby heating for the vehicle interior is enabled. The coolant passing through heater core 17 is returned to water-refrigerant evaporator 13.

In the heating mode, heat is transferred from the low-temperature coolant flowing through water-refrigerant evaporator 13 to the high-temperature coolant flowing through water-refrigerant condenser 12 by the action of the heat pump. Therefore, even when the temperature of engine cooling portion 16 is low, the heating capacity for the vehicle interior can be enhanced by increasing the temperature of the coolant in heater core 17.

As described above, according to the air conditioning device for a vehicle in the first exemplary embodiment, an outdoor condenser is not used in the cooling mode, whereby the occurrence of refrigerant stagnation in the outdoor condenser can be avoided, even when the cooling mode and the heating mode are switched. Therefore, the switching between the cooling mode and the heating mode can be quickly done.

In addition, the air conditioning device for a vehicle in the first exemplary embodiment does not use an outdoor condenser, thereby allowing leeway for a space around the front part of the vehicle. Furthermore, the air conditioning device for a vehicle does not use an outdoor condenser, thereby being capable of reducing an amount of the refrigerant.

The above-mentioned first exemplary embodiment describes that water passage RW1b (see FIG. 2) is used as the passage for the coolant in the cooling mode and second water passage RW2 (see FIG. 3) is used as the passage for the coolant in the heating mode. However, the passage for the coolant is not limited thereto. Hereinafter, first to fifth modifications of the passage for the coolant will be described with reference to the drawings. Note that, in each diagram used for the description of first to fifth modifications, the components same as those in FIGS. 1 to 3 are identified by the same reference marks, and the description therefor will be omitted.

### FIRST MODIFICATION

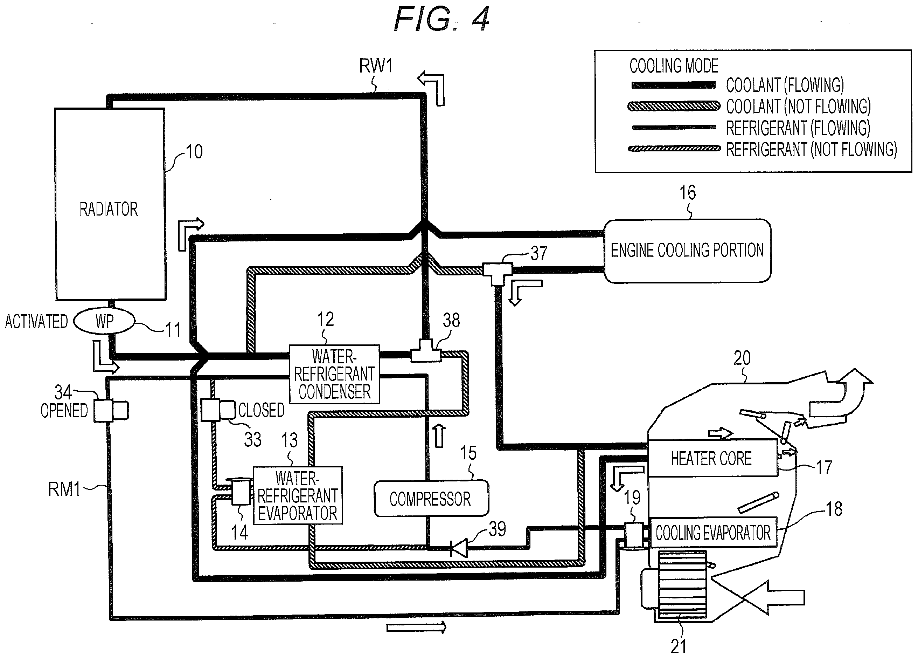

FIG. 4 is a diagram illustrating an operation of an air conditioning device for a vehicle, in a cooling mode, according to a first modification.

In the air conditioning device for a vehicle according to the first modification, in the cooling mode, the passage for the refrigerant is switched to first refrigerant passage RM1, and the passage for the coolant is switched to first water passage RW1 and water passage RW1c, as illustrated in FIG. 4.

In water passage RW1c, the coolant flowing from engine cooling portion 16 flows into heater core 17, and then, flows again into engine cooling portion 16.

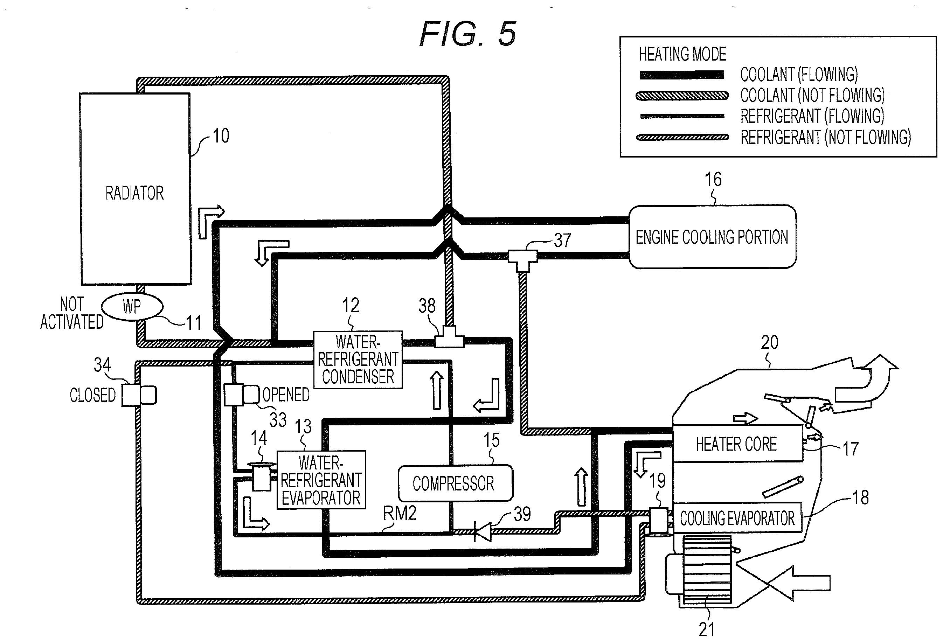

FIG. 5 is a diagram illustrating an operation of the air conditioning device for a vehicle, in a heating mode, according to the first modification.

In the air conditioning device for a vehicle according to the first modification, in the heating mode, the passage for the refrigerant is switched to second refrigerant passage RM2, and the passage for the coolant is switched to second water passage RW2a, as illustrated in FIG. 5.

In second water passage RW2a, the coolant flowing from engine cooling portion 16 sequentially flows through water-refrigerant condenser 12, water-refrigerant evaporator 13, and heater core 17, and then, flows again into engine cooling portion 16.

### SECOND MODIFICATION

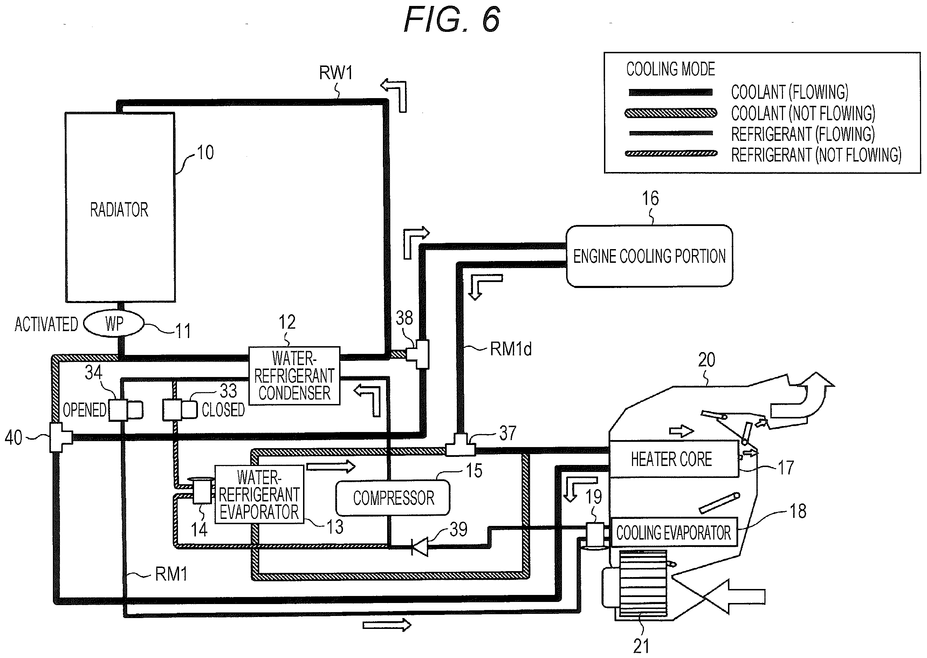

FIG. 6 is a diagram illustrating an operation of an air conditioning device for a vehicle, in a cooling mode, according to a second modification.

In the air conditioning device for a vehicle according to the second modification, in the cooling mode, the passage for the refrigerant is switched to first refrigerant passage RM1, and the passage for the coolant is switched to first water passage RW1 and water passage RW1d, as illustrated in FIG. 6.

In water passage RW1d, the coolant flowing from engine cooling portion 16 flows into heater core 17, and then, flows again into engine cooling portion 16.

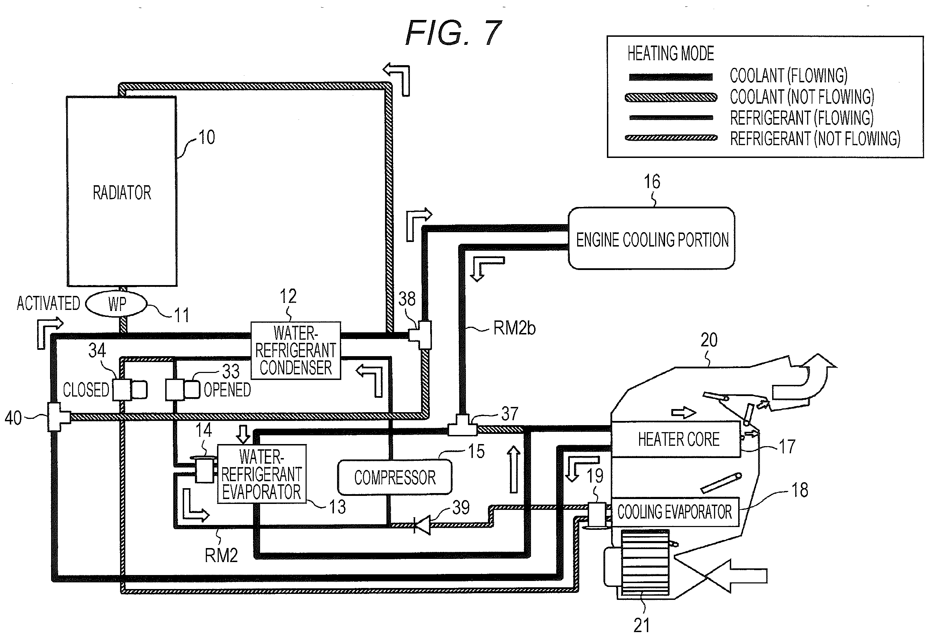

FIG. 7 is a diagram illustrating an operation of the air conditioning device for a vehicle, in a heating mode, according to the second modification.

In the air conditioning device for a vehicle according to the second modification, in the heating mode, the passage for the refrigerant is switched to second refrigerant passage RM2, and the passage for the coolant is switched to second water passage RW2b, as illustrated in FIG. 7.

In second water passage RW2b, the coolant flowing from engine cooling portion 16 sequentially flows through water-refrigerant evaporator 13, heater core 17, and water-refrigerant condenser 12, and then, flows again into engine cooling portion 16.

### THIRD MODIFICATION

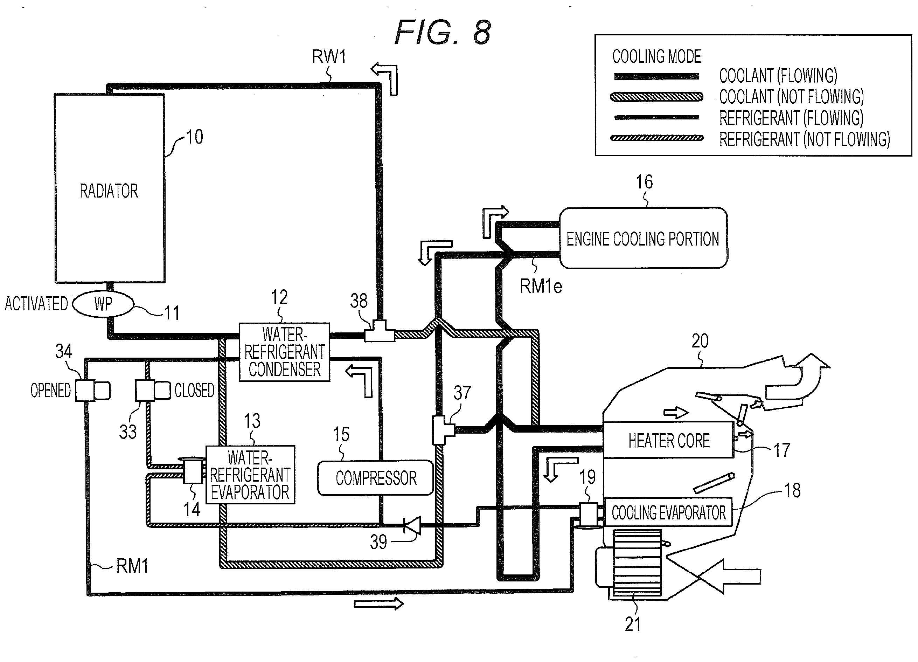

FIG. 8 is a diagram illustrating an operation of an air conditioning device for a vehicle, in a cooling mode, according to a third modification.

In the air conditioning device for a vehicle according to the third modification, in the cooling mode, the passage for the refrigerant is switched to first refrigerant passage RM1, and the passage for the coolant is switched to first water passage RW1 and water passage RW1e, as illustrated in FIG. 8.

In water passage RW1e, the coolant flowing from engine cooling portion 16 flows into heater core 17, and then, flows again into engine cooling portion 16.

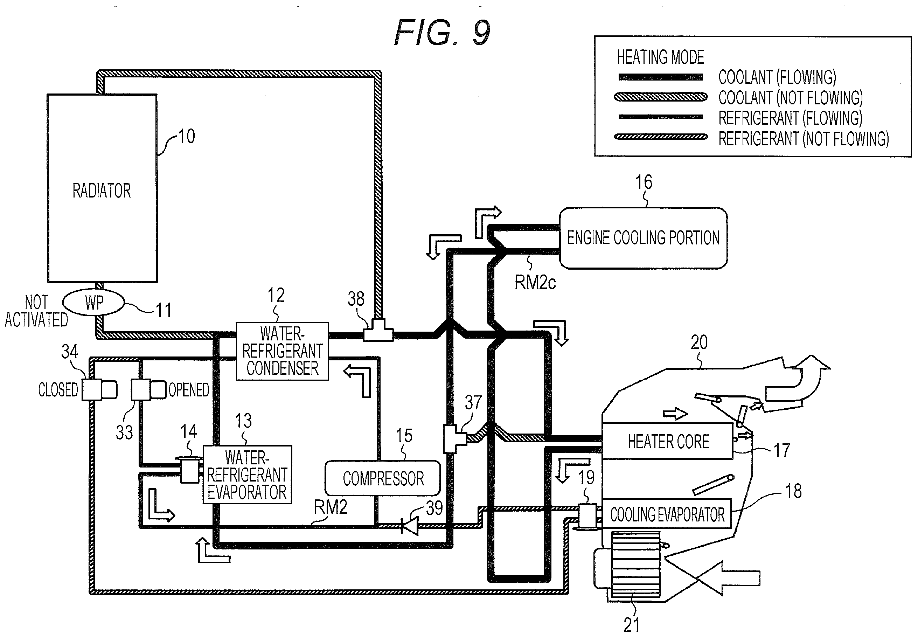

FIG. 9 is a diagram illustrating an operation of the air conditioning device for a vehicle, in a heating mode, according to the third modification.

In the air conditioning device for a vehicle according to the third modification, in the heating mode, the passage for the refrigerant is switched to second refrigerant passage RM2, and the passage for the coolant is switched to second water passage RW2c, as illustrated in FIG. 9.

In second water passage RW2c, the coolant flowing from engine cooling portion 16 sequentially flows through water-refrigerant evaporator 13, water-refrigerant condenser 12, and heater core 17, and then, flows again into engine cooling portion 16.

### FOURTH MODIFICATION

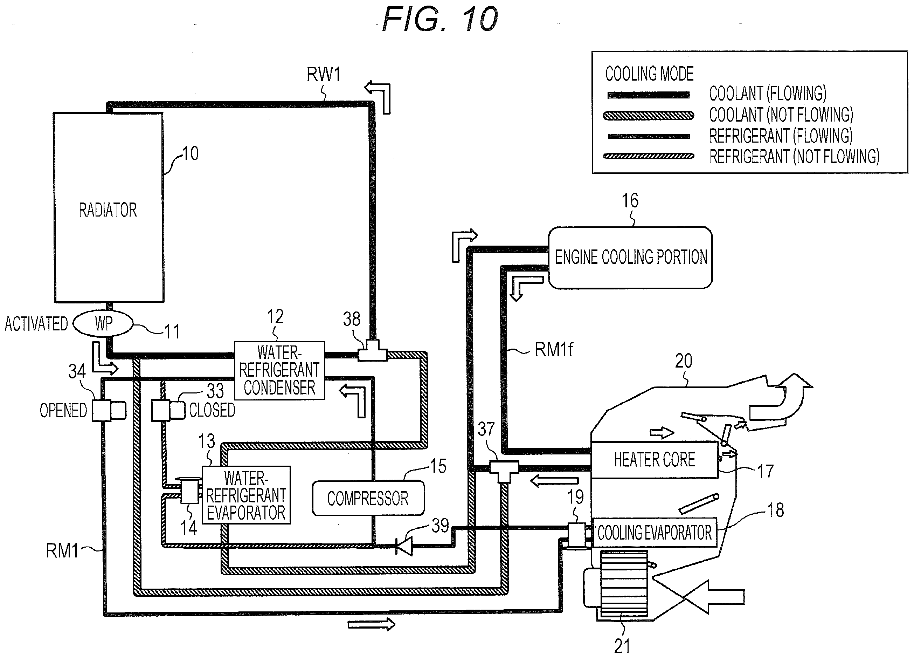

FIG. 10 is a diagram illustrating an operation of an air conditioning device for a vehicle, in a cooling mode, according to a fourth modification.

In the air conditioning device for a vehicle according to the fourth modification, in the cooling mode, the passage for the refrigerant is switched to first refrigerant passage RM1, and the passage for the coolant is switched to first water passage RW1 and water passage RW1f, as illustrated in FIG. 10.

In water passage RW1f, the coolant flowing from engine cooling portion 16 flows into heater core 17, and then, flows again into engine cooling portion 16.

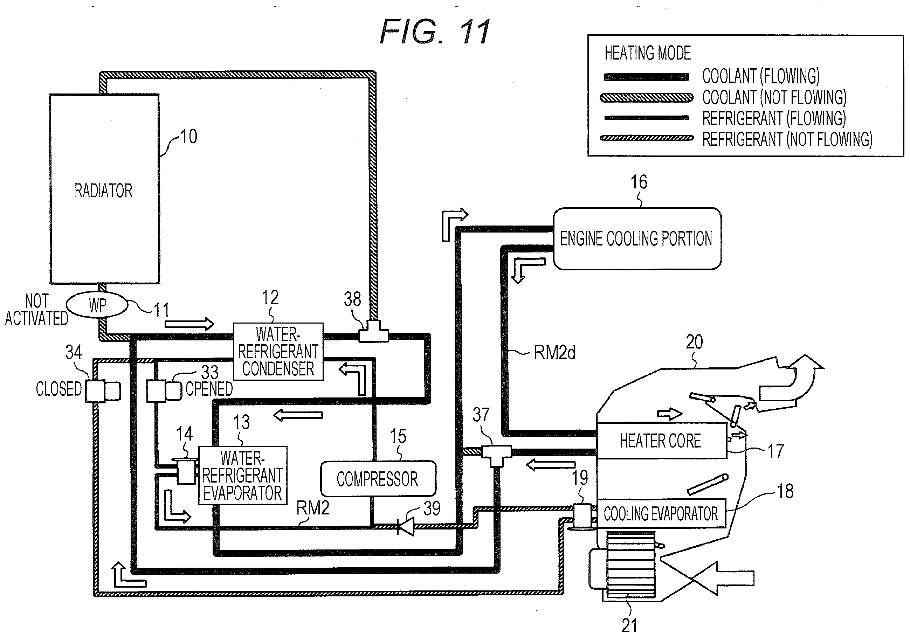

FIG. 11 is a diagram illustrating an operation of the air conditioning device for a vehicle, in a heating mode, according to the fourth modification.

In the air conditioning device for a vehicle according to the fourth modification, in the heating mode, the passage for the refrigerant is switched to second refrigerant passage RM2, and the passage for the coolant is switched to second water passage RW2d, as illustrated in FIG. 11.

In second water passage RW2d, the coolant flowing from engine cooling portion 16 sequentially flows through heater core 17, water-refrigerant condenser 12, and water-refrigerant evaporator 13, and then, flows again into engine cooling portion 16.

### FIFTH MODIFICATION

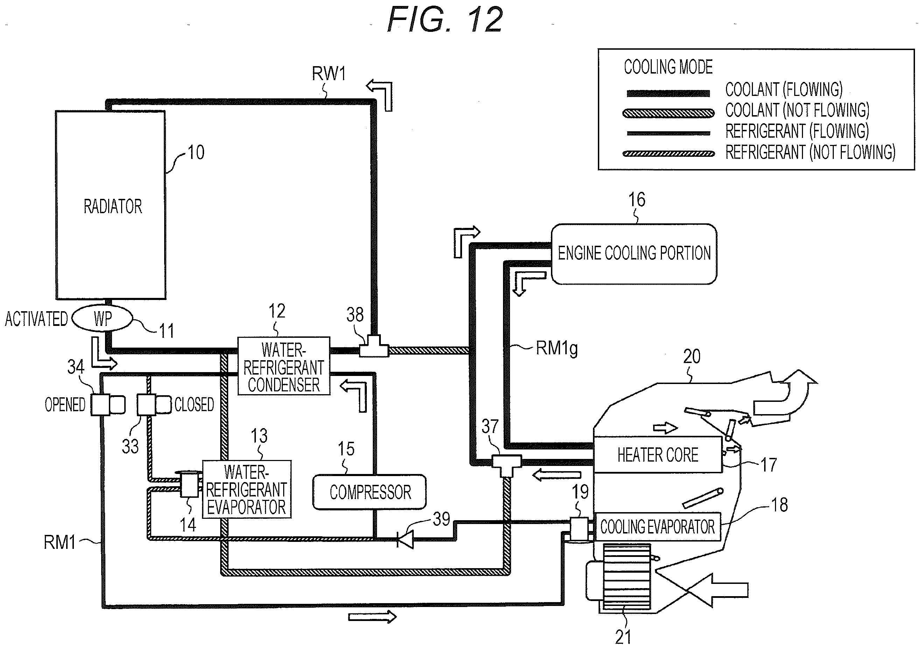

FIG. 12 is a diagram illustrating an operation of an air conditioning device for a vehicle, in a cooling mode, according to a fifth modification.

In the air conditioning device for a vehicle according to the fifth modification, in the cooling mode, the passage for the refrigerant is switched to first refrigerant passage RM1, and the passage for the coolant is switched to first water passage RW1 and water passage RW1g, as illustrated in FIG. 12.

In water passage RW1g, the coolant flowing from engine cooling portion 16 flows into heater core 17, and then, flows again into engine cooling portion 16.

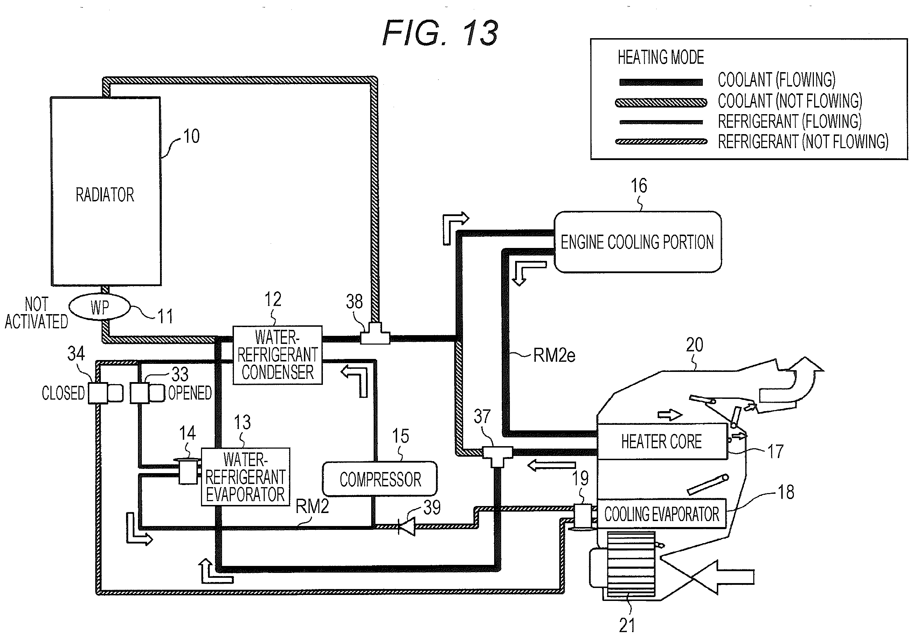

FIG. 13 is a diagram illustrating an operation of the air conditioning device for a vehicle, in a heating mode, according to the fifth modification.

In the air conditioning device for a vehicle according to the fifth modification, in the heating mode, the passage for the refrigerant is switched to second refrigerant passage RM2, and the passage for the coolant is switched to second water passage RW2e, as illustrated in FIG. 13.

In second water passage RW2e, the coolant flowing from engine cooling portion 16 sequentially flows through heater core 17, water-refrigerant evaporator 13, and water-refrigerant condenser 12, and then, flows again into engine cooling portion 16.

The first to fifth modifications of the passage for the coolant have been described above.

### SECOND EXEMPLARY EMBODIMENT

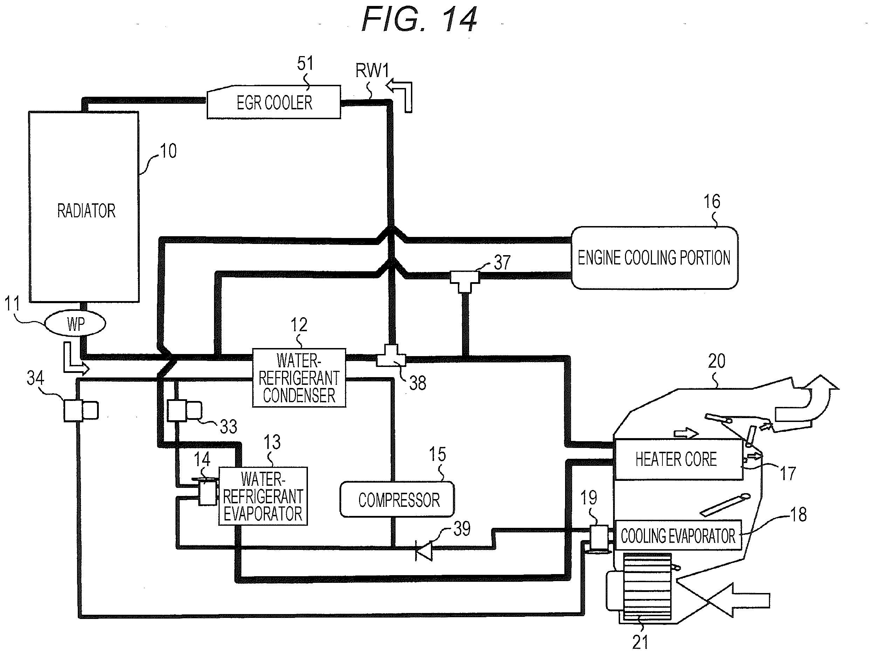

FIG. 14 is a diagram illustrating a configuration of an air conditioning device for a vehicle according to a second exemplary embodiment of the present invention.

The second exemplary embodiment illustrates an example of an air conditioning device for a vehicle in which EGR (Exhaust Gas Recirculation) cooler 51 is additionally provided on first water passage RW1 in the first exemplary embodiment so as to be connected in series with the radiator and the water-refrigerant condenser.

EGR cooler 51 is a component for cooling exhaust gas when a portion of the exhaust gas after combustion is again suctioned by the engine. Note that EGR cooler 51 is one example of a second cooling portion. Various heating components in the vehicle, such as an inverter circuit, a water cooled CAC (Charge Air Cooler), a battery, and a compressor, may be applied as a component (second heating component) cooled by the second cooling portion.

According to the second exemplary embodiment, in a cooling mode, the coolant circulating through radiator 10 and water-refrigerant condenser 12 also flows through EGR cooler 51, whereby the heat from EGR cooler 51 can be radiated from radiator 10. In the heating mode, the heat from EGR cooler 51 may be radiated from radiator 10 by activating water pump 11.

According to the air conditioning device for a vehicle in the second exemplary embodiment, EGR cooler 51 can be cooled, and due to the cooling, additional valve configuration for switching the water passage can be reduced (for example, additional configuration is unnecessary). Thus, downsizing of the entire device and reduction in cost can be realized.

### THIRD EXEMPLARY EMBODIMENT

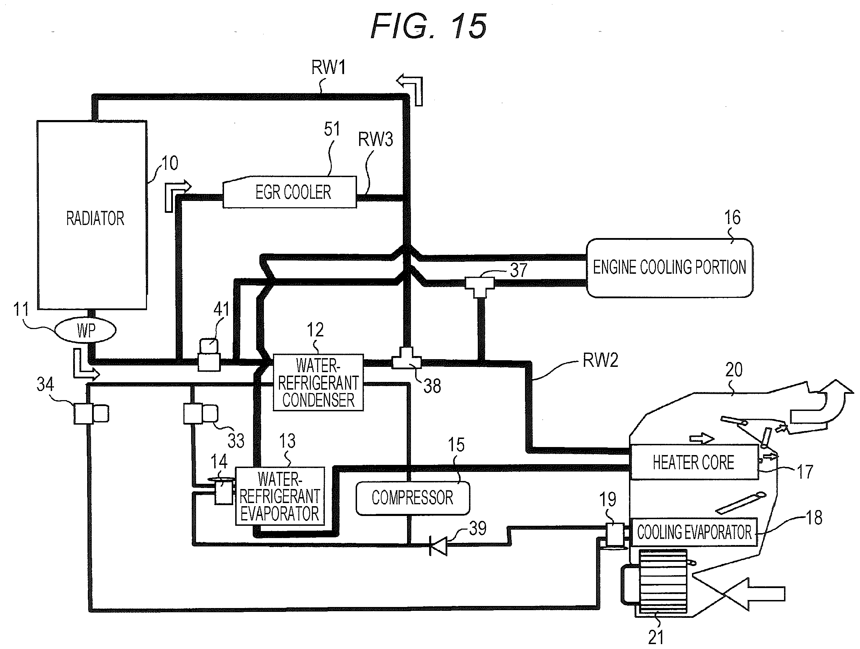

FIG. 15 is a diagram illustrating a configuration of an air conditioning device for a vehicle according to a third exemplary embodiment of the present invention.

The air conditioning device for a vehicle according to the third exemplary embodiment has a configuration in which third water passage RW3 for allowing the coolant in EGR cooler 51 to flow therethrough and a switching portion (for example, ON-OFF valve 41 corresponding to second water passage switching portion) for turning ON/OFF the flow of the coolant in third water passage RW3 are added to the configuration in the first exemplary embodiment.

Third water passage RW3 is provided on first water passage RW1 so as to be parallel with the passage for radiator 10 to allow the coolant to flow by bypassing water-refrigerant condenser 12.

According to the third exemplary embodiment, in a cooling mode, ON-OFF valve 41 is opened, so that the flow of the coolant flowing through radiator 10 is bifurcated, whereby the coolant flowing through radiator 10 flows through water-refrigerant condenser 12 and EGR cooler 51 in a parallel manner, and then, converged and returned to radiator 10. Accordingly, heat from water-refrigerant condenser 12 and EGR cooler 51 can be radiated by radiator 10.

On the other hand, in a heating mode, water pump 11 is activated and ON-OFF valve 41 is closed, by which the flow of the coolant circulating through radiator 10 and EGR cooler 51 can be formed independently of the flow of the coolant in the heating mode in the first exemplary embodiment. Accordingly, due to this flow, EGR cooler 51 can sufficiently be cooled even in the heating mode.

### FOURTH EXEMPLARY EMBODIMENT

FIG. 16 is a diagram illustrating a configuration of an air conditioning device for a vehicle according to a fourth exemplary embodiment of the present invention.

The air conditioning device for a vehicle according to the fourth exemplary embodiment has a configuration in which bypass passage RW4 and a water passage switching portion (for example, ON-OFF valve 43 corresponding to third water passage switching portion) for stopping or allowing the flow of the coolant through bypass passage RW4 are added to the configuration in the second exemplary embodiment.

Bypass passage RW4 establishes communication between a coolant inlet side and a coolant outlet side of water-refrigerant evaporator 13.

The water passage switching portion is composed of one ON-OFF valve 43, for example. ON-OFF valve 43 is provided on the middle of bypass passage RW4, for example. When ON-OFF valve 43 is opened, the flow of the coolant in water-refrigerant evaporator 13 is almost stopped due to the resistance difference, and the coolant is allowed to flow through bypass passage RW4.

According to this configuration, in a cooling mode, the coolant is allowed to flow through bypass passage RW4 to bypass water-refrigerant evaporator 13, whereby pressure loss of the passage for the coolant can be reduced. In the cooling mode, the refrigerant does not flow through water-refrigerant evaporator 13, and heat exchange is not performed. Therefore, even if the coolant does not flow through water-refrigerant evaporator 13, this does not affect the transfer of heat.

In addition, in a heating mode, when the temperature of the coolant flowing through water-refrigerant evaporator 13 is lowered, for example, the coolant is temporarily allowed to flow through bypass passage RW4 to bypass water-refrigerant evaporator 13, whereby the temperature of the coolant can quickly be increased.

The exemplary embodiments of the present invention have been described above.

The above-mentioned embodiments describe the configurations each of which does not use an outdoor condenser. However, it is unnecessary to completely eliminate an outdoor condenser, and a compact outdoor condenser may be used. Even when an outdoor condenser is used, this outdoor condenser can be downsized, whereby an effect of enabling reduction in a refrigerant stagnation amount can be obtained.

In addition, the passage for the coolant described in the first to fifth modifications may be applied to the air conditioning devices for a vehicle in the second to fourth exemplary embodiments.

### INDUSTRIAL APPLICABILITY

The present invention is applicable to an air conditioning device mounted on a vehicle.

### REFERENCE MARKS IN THE DRAWINGS

- 10: radiator
- 11: water pump
- 12: water-refrigerant condenser
- 13: water-refrigerant evaporator
- 14: first expansion valve
- 15: compressor
- 16: engine cooling portion (first cooling portion)
- 17: heater core
- 18: cooling evaporator
- 19: second expansion valve
- 21: intake fan
- 37, 38, 40: three-way valve
- 33, 34: ON-OFF valve
- 39: check valve
- 41, 43: ON-OFF valve
- RW1: first water passage
- RW2: second water passage
- RW3: third water passage
- RW4: bypass passage
- RM1: first refrigerant passage
- RM2: second refrigerant passage
- 51: EGR cooler (second cooling portion)

## Claims

1. An air conditioning device for a vehicle, the air conditioning device comprising:
a water-refrigerant condenser that condenses a refrigerant at a high temperature compressed by a compressor, by heat exchange with a coolant;
a water-refrigerant evaporator that evaporates the refrigerant expanded by passing through a first expansion valve, by heat exchange with the coolant;
a refrigerant passage switching portion configured to switch a delivery route of the refrigerant in the water-refrigerant condenser between a first refrigerant passage leading to the water-refrigerant evaporator and a second refrigerant passage leading to a cooling evaporator that cools air to be sent into a vehicle interior; and
a first water passage that delivers the coolant in the water-refrigerant condenser to a radiator that radiates heat of the coolant to outside air,
wherein
in a cooling mode, the delivery route of the refrigerant in the water-refrigerant condenser is switched to the first refrigerant passage, and heat transferred from air to the refrigerant by the cooling evaporator is transferred from the refrigerant to the coolant by the water-refrigerant condenser and radiated from the coolant to outside air by the radiator.

2. The air conditioning device for a vehicle according to claim 1, further comprising
a first water passage switching portion configured to switch a delivery route of the coolant in the water-refrigerant condenser between the first water passage and a second water passage that is in communication with a heater core that heats air to be sent into the vehicle interior.

3. The air conditioning device for a vehicle according to claim 1, further comprising:
a first cooling portion that radiates heat to the coolant from a first heating component of the vehicle; and
a second water passage switching portion configured to switch a passage for the coolant in the first cooling portion between a passage passing through the water-refrigerant condenser and a passage that does not pass through the water-refrigerant condenser.

4. The air conditioning device for a vehicle according to claim 1, further comprising
a second cooling portion that radiates heat to the coolant from a second heating component of the vehicle,
wherein
the second cooling portion is connected in series with the radiator and the water-refrigerant condenser.

5. The air conditioning device for a vehicle according to claim 1, further comprising
a second cooling portion that radiates heat to the coolant from a second heating component of the vehicle,
wherein
the second cooling portion is connected in parallel with the radiator and the water-refrigerant condenser so that the coolant is circulated between the radiator and the second cooling portion without passing through the water-refrigerant condenser.

6. The air conditioning device for a vehicle according to claim 1, further comprising:
a bypass passage that bypasses a passage for the coolant in the water-refrigerant evaporator; and
a third water passage switching portion configured to select whether to cause the coolant to flow through the water-refrigerant evaporator or through the bypass passage.

7. The air conditioning device for a vehicle according to claim 1, further comprising
a second expansion valve that is provided separately from the first expansion valve for expanding the refrigerant before the cooling evaporator.

8. The air conditioning device for a vehicle according to claim 1, further comprising
a check valve that prevents the refrigerant from flowing from the refrigerant outlet port of the water-refrigerant evaporator toward the refrigerant outlet port of the cooling evaporator.
